## Europäisches Patentamt
## European Patent Office
## Office européen des brevets

(19)

(11) Veröffentlichungsnummer: **0 133 512**
**B1**

(12) # EUROPÄISCHE PATENTSCHRIFT

(45) Veröffentlichungstag der Patentschrift:
14.10.87

(51) Int. Cl.⁴: **F 25 B 49/00**, G 05 D 23/19

(21) Anmeldenummer: 84108732.3

(22) Anmeldetag: 24.07.84

(54) Durchsatzregelung für ein Kältemittel einer Wärmepumpe.

(30) Priorität: 06.08.83 DE 8322961 U

(43) Veröffentlichungstag der Anmeldung:
27.02.85 Patentblatt 85/9

(45) Bekanntmachung des Hinweises auf die Patenterteilung:
14.10.87 Patentblatt 87/42

(84) Benannte Vertragsstaaten:
AT BE CH DE FR GB IT LI LU NL SE

(56) Entgegenhaltungen:
DE-A-2 939 586
DE-A-3 011 543
DE-A-3 129 410
FR-A-1 289 972
FR-A-2 222 616
FR-A-2 375 559
US-A-4 244 182

(73) Patentinhaber: Joh. Vaillant GmbH u. Co.,
Berghauser Strasse 40 Postfach 10 10 20, D-5630
Remscheid 1 (DE)
(84) Benannte Vertragsstaaten: DE IT LU SE

(73) Patentinhaber: COFRABEL N.V., Goldenhopestraat
15, B-1620 Drogenbos (BE)
(84) Benannte Vertragsstaaten: BE

(73) Patentinhaber: VAILLANT S.A.R.L, 4, Rue des
Oliviers Orly- Sénia 326, F-94537 Rungis Cedex (FR)
(84) Benannte Vertragsstaaten: FR

(73) Patentinhaber: VAILLANT Ges.m.b.H,
Forchheimergasse 7 Postfach 56, A-1233 Wien (AT)
(84) Benannte Vertragsstaaten: AT

(73) Patentinhaber: Vaillant Ltd., Vaillant Building,
Aerodrome Way Heston Industrial Estate, GB-
Hounslow, Middx. TW5 9QB (GB)
(84) Benannte Vertragsstaaten: GB

(73) Patentinhaber: SCHONEWELLE B.V., Ellermanstraat
17, NL- 1099 BX Amsterdam (NL)
(84) Benannte Vertragsstaaten: NL

(73) Patentinhaber: Vaillant GmbH, Riedstrasse 8, CH-
8953 Dietikon 1 (CH)
(84) Benannte Vertragsstaaten: CH LI

(72) Erfinder: Heimbach, Paul, Hirschweg 81, D-5068
Odenthal 2 (DE)
Erfinder: Braunschweig, Dieter, Hardtplätzschen
64, D-5600 Wuppertal 23 (DE)

(74) Vertreter: Heim, Johann- Ludwig, c/o Joh. Vaillant
GmbH u. Co Postfach 10 10 20 Berghauser
Strasse 40, D-5630 Remscheid 1 (DE)

LIBER, STOCKHOLM 1987

## Beschreibung

Die vorliegende Erfindung bezieht sich auf eine Wärmepumpe mit einem Durchsatzregler für ein Kältemittel dieser Wärmepumpe gemäß dem ersten Teil der Ansprüche 1 und 4.

Aus der DE-A-3 129 410 ist eine Expansionsventilanordnung für eine Wärmepumpe bekanntgeworden, bei der das Expansionsventil in einem Pulspausenverhältnis gesteuert wird und wobei zur Steuerung des Pulspausenverhältnisses Zustandskriterien innerhalb der Wärmepumpe verwendet werden. Als Zustandskriterien kommen hier die Wasservorlauftemperatur des Verbrauchers, die Wasserrücklauftemperatur, der momentan herrschende Verdampferdruck, die Außentemperatur der Wärmequelle oder auch eine Druckdifferenz von Verdampfer- und Kondensatorseite in Frage, wobei diese Steuergrößen allein oder in sinnvoller Verknüpfung ausgewertet werden können.

Dieser Stand der Technik berücksichtigt aber nicht, daß es im wesentlichen auf den Temperatur-Istwert am Verdampfereingang ankommt, der im übrigen einem Verdampfungsdruck an dieser Stelle gleichgesetzt werden kann.

Auch eine Ansteuerung des Expansionsventils nach der Temperaturdifferenz zwischen Verdampferein- und -ausgang, das heißt, eine Variation des Pulspausenverhältnisses des Arbeitszustandes des Expansionsventils nach Maßgabe der Überhitzung des Dampfes am Verdampferausgang führt nicht zu den gewünschten Ergebnissen.

Der vorliegenden Erfindung liegt die Aufgabe zugrunde, eine Durchsatzregelung für ein pulspausentaktgesteuertes Expansionsventil anzugeben, die in Abhängigkeit von der Außentemperatur und dem Wärmebedarf des Verbrauchers dafür sorgt, daß dem Verdampfer innerhalb der Grenzen, die sich aus einem Oberfüllen des Verdampfers mit nicht verdampfbarem Kältemittel und einem zu starken Überhitzen des Kältemittels ergeben, ein optimaler Kältemitteldurchsatz zugeführt wird.

Die Lösung dieser Aufgabe liegt in den kennzeichnenden Merkmalen Ansprüche 1 und 4.

Weitere Ausgestaltungen und besonders vorteilhafte Weiterbildungen der Erfindung sind Gegenstand der abhängigen Ansprüche Ausführungsbeispiele der Erfindung werden anhand der Figuren 1 bis 3 der Zeichnung näher erläutert.

Es zeigen:

Figur 1 ein Blockschaltbild der Durchsatzregelung in einer Grundausführung,

Figur 2 Temperaturdiagramme und

Figur 3 ein Blockschaltbild in einer alternativen Ausführung des Reglers.

In allen Figuren bedeuten gleiche Bezugzeichen jeweils die gleichen Einzelheiten.

Eine Wärmepumpe, insbesondere eine Absorptionswärmepumpe, weist einen nicht dargestellten von einem Brenner beheizten Austreiber, einen im Kältemitteldampf weglich hieran anschließenden Kondensator und eine von diesem ausgehende Leitung 1 auf, die zu einem Kältetauscher 2 führt. Stromab des Kältetauschers setzt sich die Leitung 1 fort und führt zu einem Expansionsventil 3, das als ein von einem Elektromagneten 4 stellbares Magnetventil ausgebildet ist, das nur die Zustände geschlossen oder offen annehmen kann. Stromab des Expansionsventils 3 ist an der Leitung 1 ein Temperaturfühler 5 angeordnet, der mit einer Meßleitung 6 versehen ist. Stromab des Fühlers 5 mündet die Leitung 1 am Eingang 7 eines Verdampfers 8, an dessen Ausgang 9 sie wieder austritt und dort als Leitung 10 zurück zum Kältetauscher 2 führt. Stromab des Kältetauschers 2 setzt sich die Leitung 10 fort und führt über den Absorber zurück zum Austreiber der Wärmepumpe. An die Leitung 10 ist zwischen Verdampferausgang 9 und Kältewechsler 2 ein weiterer Temperaturfühler 11 angeschlossen, der mit einer Meßleitung 12 versehen ist.

Die Meßleitungen 6 und 12 führen zu einem Durchsatzregler 13, dessen Stellausgang eine Leitung 14 bildet, die zu dem Magneten 4 des Expansionsventils 3 führt.

An den Durchsatzregler 13 ist eine weitere Meßleitung 15 angeschlossen, die mit einem Außentemperaturfühler 16 verbunden ist.

Die Meßleitung 6 ist an einen Meßumformer 17 innerhalb des Durchsatzreglers 3 angeschlossen, der die vom Fühler 5 gemessene Temperatur in ein ihr proportionales Spannungssignal umsetzt. Ein weiterer Meßumformer 18 ist an die Leitung 12 angeschlossen, auch dieser Meßumformer gibt an seinem Ausgang einen dem Temperatursignal des Fühlers 11 proportionalen Spannungswert ab. Der Ausgang des Meßumformers 17 ist über eine Leitung 19 mit einem PI-Regler 20 verbunden. Bei der Grundausführung nach Figur eins ist ein zweiter Eingang 21 des PI-Reglers über eine entsprechende Leitung mit einem dritten Meßumformer 22 verbunden, an den die Leitung 15 angeschlossen ist und an dessen Ausgang ein mit der Außentemperatur proportionales Spannungssignal ansteht. Das mit der Außentemperatur variable Spannungssignal auf der Leitung 21 kann durch einen Sollwerteinsteller 23 korrigiert werden.

An den Ausgang des PI-Reglers 20 ist eine Leitung 24 angeschlossen, die zu einem Umformglied 25 führt, das nach Maßgabe der Eingangssignale an seinem Ausgang 26 zeitlich variable Impulse und Impulspausen für die Spannungen anstehen läßt.

Das auf der Leitung 24 anstehende Spannungssignal kann durch einen Arbeitspunkteinsteller 27 beeinflußt werden.

Weiterhin ist ein Handeinsteller 28 für bestimmte Puls- oder Pausenzeiten des Expansionsventils 3 vorgesehen, der über eine Stelleitung 29 mit dem Umformglied 25 verbunden ist. Einen Ausgang 30 des Umformgliedes 25 bildet eine Signallampe 31, die bei Aufleuchten den Zustand Regelbetrieb kennzeichnet.

Der Ausgang 26 des Umformgliedes 25 ist auf ein Steuerteil 32 für bestimmte Betriebsarten des Expansionsventils aufgeschaltet. An dieses Steuerteil ist die Stelleitung 14 angeschlossen. Dem Steuerteil 32 ist ein Betriebsartenschalter 33 vorgeschaltet, der von einer Handhabe 34 bedienbar ist und bei dem bestimmte Betriebsarten über Leitungen 35 und 36 vorgewählt werden können. Im Zuge der Leitung 36, die einen Dauerbetrieb kennzeichnet, liegt eine entsprechende Signallampe 37, die bei Dauerbetrieb aufleuchtet.

Der Ausgang des Meßumformers 18 ist über eine Leitung 38 mit einem 2-Punkt-Regler 39 verbunden, dessen Ausgang über eine Leitung 40 mit einem Zeitglied 41 verbunden ist. Der Ausgang 42 des Zeitgliedes ist auf das Steuerteil 32 geschaltet. Das Zeitglied weist als weiteren Ausgang eine Leitung 43 auf, die mit einer Signallampe 44 für das Anzeigen eines Störbetriebs versehen ist.

Der Ausgang 42 des Zeitgliedes ist über eine Leitung 45 auf einen weiteren Eingang des 2-Punkt-Reglers 39 geschaltet. Ein dritter Eingang 46 des 2-Punkt-Reglers ist von einer Leitung gebildet, die an einen Ausgang des Meßumformers 22 und eine Handeinstellung für den Sollwert der Dampftemperatur 47 angeschlossen ist.

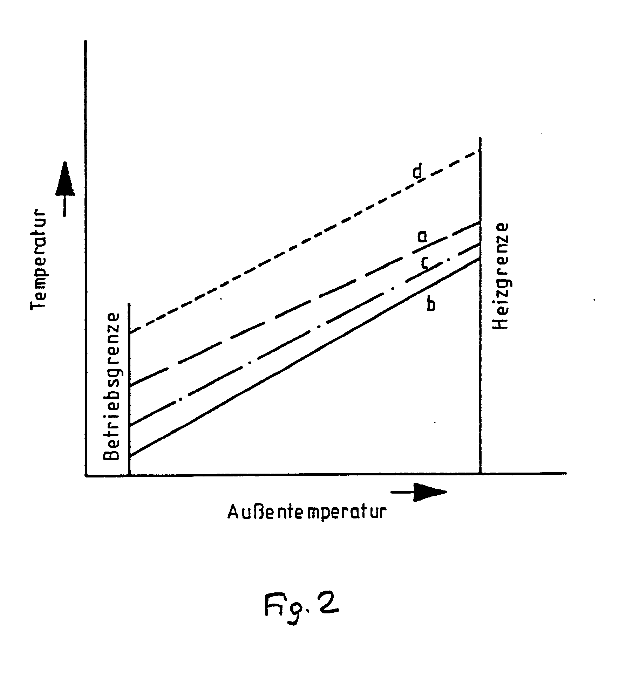

Die Figur 2 im Diagramm die Außentemperatur, gemessen mit dem Temperaturfühler 16 als Kurve a, die Dampftemperatur am Ende 9 des Verdampfers, gemessen durch den Temperaturfühler 11 als Kurve b, die Regelgröße, nämlich die Verdampfungstemperatur am Eingang 7 des Verdampfers, gemessen durch den Temperaturfühler 5 als Kurve c, und schließlich die Dampftemperatur d' am Ausgang 9 des Verdampfers 8, gemessen durch den Temperaturfühler 11, jeweils in Abhängigkeit von der Außentemperatur. Die Außentemperatur ist hierbei durch Betriebsgrenzer eingegrenzt, wobei sich die eine Betriebsgrenze bei einer niedrigen Außentemperatur ergibt, bei deren Unterschreiten ein wirtschaftlicher Einsatz der Wärmepumpe nicht mehr möglich ist und deren maximale Grenze sich dadurch ergibt, daß bei einer sie überschreitenden Temperatur eine Heizung nicht mehr stattfinden braucht.

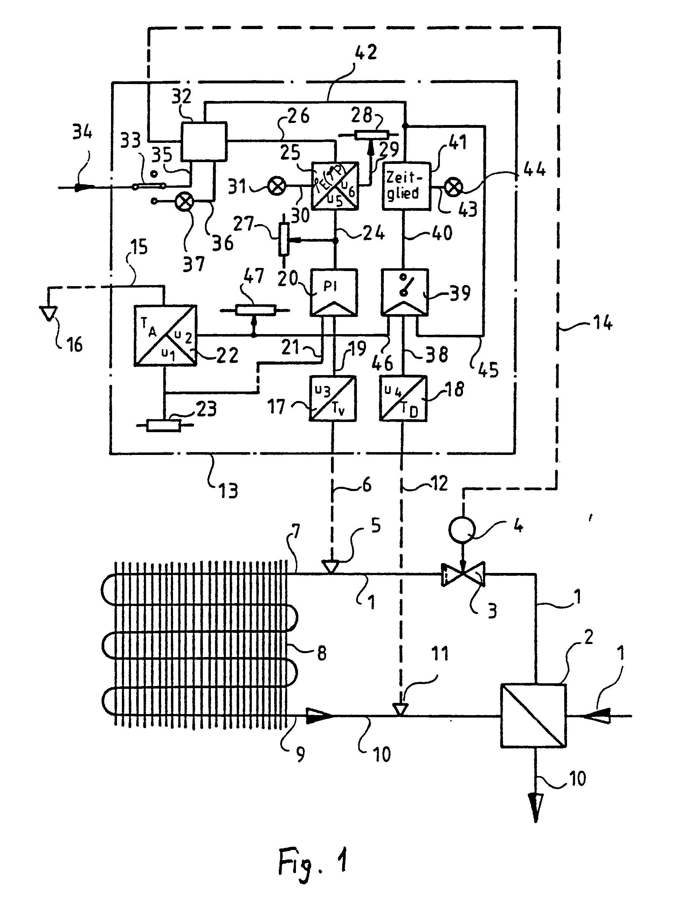

Die Durchsatzregelung gemäß Figur 1 weist folgende Funktion auf:

Durch den Temperaturfühler 5 wird der Temperaturzustand des expandierten Kältemittels erfaßt. Diese Meßgröße wird in eine dem Temperaturwert proportionale Spannung umgesetzt und dem PI-Regler 20 zugeführt. Der Sollwert des PI-Reglers ergibt sich nach Maßgabe des durch den Handeinsteller 23 gegebenenfalls korrigierten Außentemperaturwertes. Die Außentemperatur stellt somit für den PI-Regler die Führungsgröße dar. Gemäß der Regelabweichung resultiert auf dem Ausgang 24 des PI-Reglers 20 eine Stellgröße, die gegebenenfalls über den Handeinsteller 27 korrigiert wird und im Umformglied 25 in eine Rechteck-Impulsspannung umgesetzt wird, bei der Aufzustände des Expansionsventils 3 einen Spannungsimpuls, Geschlossenzustände des Expansionsventils hingegen einem fehlenden Spannungsimpuls entsprechen. Das dem Steuerteil 32 nachgeschaltete Stellglied, nämlich der Elektromagnet 4, wird über die Leitung 14 mit dieser Pulsfolge angesteuert. Durch diese Durchsatzregelung ist sichergestellt, daß eine bestimmte Temperatur am Eingang 7 des Verdampfers für das Kältemittel aufrechterhalten wird, wobei diese Regelgröße mit der Außentemperatur und damit mit dem Wärmebedarf des von der Wärmepumpe beheizten Verbrauchers variabel ist. Die Regelgröße ist hierbei so gewählt, daß einerseits eine Oberfüllung des Verdampfers mit nichtverdampfbarem Kältemittel verhindert wird und daß andererseits so viel Kältemittel auf den Verdampfer gegeben wird, wie dieser aufgrund der Augenblickszustände gerade zu verdampfen imstande ist.

Um trotzdem eine Oberfüllung des Verdampfers mit Kältemittel zu verhindern, ist der 2-Punkt-Regler 39 vorgesehen. Eingangsgröße für diesen 2-Punkt-Regler ist die vom Temperaturfühler 11 gemessene Temperatur am Ausgang 9 des Verdampfers 8. Nach Umsetzen durch den Meßumformer 18 an einen mit der Temperatur proportional variablen Spannungswert wird dieser Spannungsistwert mit einer Sollspannung verglichen, die dem 2-Punkt-Regler über die Leitung 46 zugeführt wird und die von der Außentemperatur abgeleitet ist. Bei Unterschreiten der Solltemperatur beziehungsweise des Sollspannungswertes entsteht ein Schaltimpuls, der die Einspritzung unterbricht. Hierbei wird das Zeitglied 41 für eine bestimmte Zeit aktiviert, was über die Signallampe 44 angezeigt wird. Das Zeitglied unterbricht für die an ihm eingestellte Zeit über die Leitung 42 ein Weiterleiten der Impulsfolge aus dem Umformglied 25 an das Expansionsventil 3. Nach Ablauf der am Zeitglied eingestellten, gegebenenfalls variabel gehaltenen Zeit versucht der Durchsatzregler 13 wieder auf den Normalbetrieb umzuschalten. Erreicht die Dampftemperatur in dieser Spanne den Sollwert nicht, kommt es zu einem von dem Zeitglied gesteuerten periodischen Regel-/Störbetrieb, der erst bei Überschreiten der Solltemperatur aufgehoben wird.

Durch den Betriebsartenschalter 33 kann die Regelung unterlaufen werden durch die Stellung Dauerbetrieb oder offenlassen.

Die beschriebene Grundausführung der Zweipunkt Regelung kann bei Überfüllung des Verdampfers mit flüssigem Kältemittel zu Schwingungen der Dampftemperatur am Ausgang des Verdampfers führen. Diese Gefahr wird durch eine Variante der Einspritzregelung

5 **0.133 512** 6

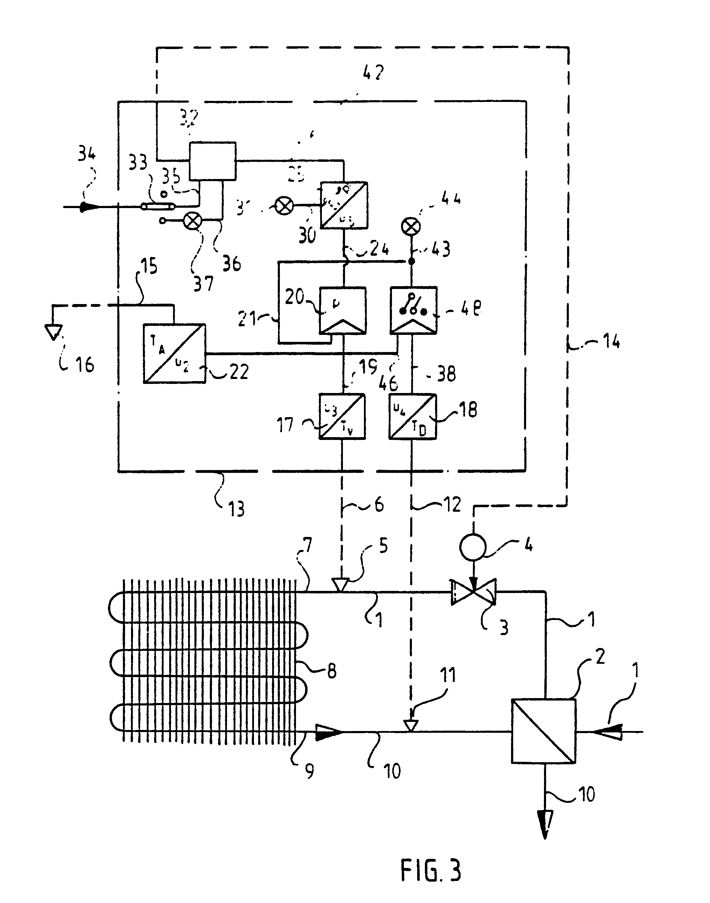

nach Figur 3 ausgeschlossen.

Hier wird über einen Vergleich 48 die Dampftemperatur mit einer von der Außentemperatur abhängigen Führungsgröße verglichen. Ist die Regelgröße (Dampftemperatur) kleiner als die Führungsgröße (Außentemperatur), so wird die Führungsgröße des PI-Reglers 20 (ebenfalls die Außentemperatur) durch die Dampftemperatur ersetzt. Dies bewirkt eine Regelabweichung, die zwangsläufig eine Verringerung der Einspritzung von Kältemittel in den Verdampfer zur Folge hat mit der Maßgabe, daß der Einspritzdurchsatz umso stärker zurückgenommen wird, je größer die Regelabweichung ist. Der Eingriff in die Durchsatzregelung wird wieder aufgehoben, sobald die Dampftemperatur den von der Außentemperatur vorgegebenen Sollwert überschreitet.

Figur 3 das Blockschaltbild dieses Reglers. Gegenüber Figur eins entfallen das Zeitglied 41 und die Handeinsteller 23, 27, 28 und 47. Der 2-Punkt-Regler 39 wird zum Vergleicher 48 und zum Sollwertumschalter für den PI-Regler 20. An dem Temperaturspannungswandler 22 fällt die Spannung u1 weg, an dem Umformglied 25 die Spannung u6.

**Patentansprüche**

1. Wärmepumpe mit einem Durchsatzregler für ein Kältemittel dieser Wärmepumpe, das über ein Expansionsventil (3, 4) einem Verdampfer (8) zugeführt wird, wobei der Regler einen Temperaturfühler (5, 11) aufweist und das im Pulspausenbetrieb arbeitende Expansionsventil das Stellglied des Reglers bildet, dadurch gekennzeichnet, daß der Regler als Proportionalintegralregler (20) ausgebildet ist, dessen Temperaturfühler (5) die Temperatur der Kältemittelleitung zwischen dem Expansionsventil (3) und dem Eingang (7) des Verdampfers (8) abfühlt und daß ein weiterer Eingang des PI-Reglers an eine Meßleitung (15/21) angelegt ist, die mit einem Außentemperaturfühler (16) verbunden ist, und daß ein Ausgang (24) des PI-Reglers über ein Spannungs-/Zeitumformglied (25) mit einer Stelleitung (14) für den Elektromagneten (4) des Expansionsventils (3) verbunden ist und daß ein Zweipunktregler (39) vorgesehen ist, dessen einer Eingang mit einer zu einem Temperaturfühler (11) gehenden Meßleitung (12) verbunden ist, wobei dieser Temperaturfühler an eine Kältemitteldampfleitung (10) zwischen dem Ausgang (9) des Verdampfers (8) und ein Kältetauscher (2) angechlossen ist, und daß ein Ausgang (40) des Zweipunktreglers über ein Zeitglied (41) mit einem Steuerteil (32) verbunden ist, das in den Ausgang (26) des PI-Reglers (20) geschaltet ist.

2. Wärmepumpe nach Anspruch 1, dadurch gekennzeichnet, daß ein weiterer Eingang (45) des Zweipunktreglers (39) von dem Ausgang (42) des Zeitglieds (41) gebildet ist.

3. Wärmepumpe nach Anspruch 1 oder 2, dadurch gekennzeichnet, daß ein weiterer Eingang des Zweipunktreglers (39) von einer Meßleitung (46) gebildet ist, die mit dem Außentemperaturfühler (16) in Verbindung steht.

4. Wärmepumpe mit einem Durchsatzregler für ein Kältemittel dieser Wärmepumpe, das über ein Expansionsventil (3, 4) einem Verdampfer (8) zugeführt wird, wobei der Regler einen Temperaturfühler (5, 11) aufweist und das im Pulspausenbetrieb arbeitende Expansionsventil das Stellglied des Reglers bildet, dadurch gekennzeichnet, daß dem Eingang für die Führungsgröße des PI-Reglers (20) ein Vergleicher (48) vorgeschaltet ist, der einmal mit einem Außentemperaturfühler (16) und zum anderen mit einem Temperaturfühler (11) am Ausgang (10) des Verdampfers (8) verbunden ist, daß der Vergleicher (48) eine von der Außentemperatur abhängige Führungsgröße auf den PI-Regler (20) schaltet, sofern die Außentemperatur über der Kältemitteltemperatur im Ausgang des Verdampfers liegt, und daß der Vergleicher als Führungsgröße die Kältemittel-Dampftemperatur am Ausgang (10) des Verdampfers (8) auf den PI-Regler (20) schaltet, wenn die Dampftemperatur kleiner als die Außentemperatur ist, wobei der Temperaturfühler (5) zwischen Expansionsventil (3) und Verdampfer (8) über einen Meßwertumformer (17) mit dem PI-Regler (20) verbunden ist und dem Expansionsventil (3) ein Elektromagnet (4) zugeordnet ist, der über eine Stelleitung (14) mit einem Steuerteil (32) verbunden ist, an dessen Eingang der Ausgang des PI-Reglers (20) geschaltet ist.

**Claims**

1. A heat pump comprising a flow controlsystem for a refrigerant which is used in that heat pump and is supplied through an expansion valve (3, 4) to an evaporator (8), wherein the controlsystem comprises a temperature sensor (5, 11) and the expansion valve operates in a mark-space mode and constitutes the final control element of the control system, characterized in that the control system comprises a proportional-integral controller (20) and its temperature sensor (5) senses the temperature of the refrigerant line between the expansion valve (3) and the input (7) of the evaporator, another input of the PI controller is connected to a measuring line (15/21), which is connected to an outdoor temperature sensor (16), an output (24) of the PI controller is connected by a voltage-time converter (25) to a control line (14) for the solenoid (4) of the expansion valve (3), a two-state controller (39) is provided, one input of which is connected to a measuring line (12) leading to a temperature sensor (11), which is connected to a refrigerant vapor line (10) between the outlet (9) of the evaporator (8) and a refrigeration exchanger (2), and one output (40) of the two-state controller is connected by a time function element (41) to a control element (32), which is connected in the output (28) of the PI controller (20).

2. A heat pump according to claim 1, characterized in that a further input (45) of the two-state controller (39) is constituted by the output (42) of the time function element (41).

3. A heat pump according to claim 1 or 2, characterized in that a further input of the two-state controller (39) is constituted by a measuring line (46), which is connected to the outdoor temperature sensor (16).

4. A heat pump comprising a flow control system for a refrigerant which is used in that heat pump and is supplied through an expansion valve (3, 4) to an evaporator (8), wherein the controll system comprises a temperature sensor (5, 11) and the expansion valve operates in a mark-space mode and constitutes the final control element of the control system, characterized in that the reference variable input fo the PI controller (20) is preceded by a comparator (48) which is connected to an outdoor temperature sensor (16) and to a temperature sensor (11) disposed at the outlet (10) of the evaporator (8), the comparator (48) delivers to the PI controller (20) a reference variable which depends on the outdoor temperature when the outdoor temperature exceeds the refrigerant temperature in the outlet of the evaporator, and that the comparator delivers to the PI controller (20) a reference variable consisting of the refrigerant vapor temperature at the outlet (10) of the evaporator (8) when the vapor temperature is lower than the outdoor temperature, the temperature sensor (5) disposed between the expansion valve (3), the evaporator (8) is connected to the PI controller (20) via a transducer (17) and the expansion valve (3) has associated with it a solenoid (4), which is connected by a control line (14) to a control element (32), which has an input connected to the output of the PI controller (20).

**Revendications**

1. Thermopompe avec un régulateur de débit pour un frigorigène de cette thermopompe, lequel, par l'intermédiaire d'un détendeur (3, 4), arrive dans un évaporateur (8), le régulateur comportant une sonde thermométrique (5, 11) et le détendeur qui fonctionne en mode impulsions/intervalles constituant l'organe commandé par le régulateur, caractérisée par le fait que le régulateur est un régulateur PI (20) dont la sonde thermométrique (5) contrôle la température de la conduite de frigorigène entre le détendeur (3) et l'entrée (7) de l'évaporateur (8), et qu'une autre entrée du régulateur PI est reliée à une ligne (15/21) comportant une sonde thermométrique d'extérieur (16), et qu'une sortie (24) du régulateur PI est reliée, par l'intermédiaire d'un organe transformateur (25), à une ligne (14) commandant le fonctionnement de l'électro-aimant (4) du détendeur (3), et qu'il est prévu un régulateur tout ou rien (39) dont l'une entrée est reliée à une ligne (12) se terminant à une sonde thermométrique (11), ladite sonde thermométrique contrôlant une conduite de vapeur de frigorigène (10) entre la sortie (9) de l'évaporateur (8) et un échangeur de température (2), et qu'une sortie (40) du régulateur tout ou rien est reliée à un dispositif de commande (32) faisant partie de la sortie (26) du régulateur tout ou rien (20).

2. Thermopompe suivant la revendication 1, caractérisée par le fait qu'une autre entre (45) du régulateur tout ou rien (39) est formée par la sortie (42) de l'organe minuteur (41).

3. Thermopompe suivant la revendication 1 ou 2, caractérisée par le fait qu'une autre entrée du régulateur tout ou rien (39) est formée par une ligne (46) qui est en contact avec la sonde thermométrique d'extérieur (16).

4. Thermopompe avec un régulateur de débit pour un frigorigène de cette thermopompe, lequel, par l'intermédiaire d'un détendeur (3, 4), arrive dans un évaporateur (8), le régulateur comportant une sonde thermométrique (5, 11) et le détendeur qui fonctionne en mode impulsions/intervalles constituant l'organe commandé par le régulateur, caractérisée par le fait que l'entrée pour la grandeur pilote du régulateur PI (20) est précédée d'un organe comparateur (48) auquel sont reliées d'une part une sonde thermométrique d'extérieur (16) et, de l'autre, une sonde thermométrique (11) disposée à la sortie (10) de l'évaporateur (8), et que l'organe comparateur (48) applique au régulateur PI (20) une grandeur pilote en fonction de la température extérieure au moment où ladite température est supérieure à la température du frigorigène à la sortie de l'évaporateur, et que l'organe comparateur applique comme grandeur pilote la température de la vapeur de frigorigène à la sortie (10) de l'évaporateur (8) au régulateur (20), si la température de vapeur est inférieure à la température extérieure, la sonde thermométrique (5) entre le détendeur (3) et l'évaporateur (8) étant reliée au régulateur PI (20) par l'intermédiaire d'un transducteur de mesure (17) et le détendeur (3) étant combiné avec un électro-aimant (4) qui est relié par une ligne (14) à un dispositif de commande (32) à l'entrée duquel est reliée la sortie du régulateur PI (20).

Fig. 1

Fig. 2

FIG. 3